# EUROPÄISCHE PATENTANMELDUNG

(11) **EP 0 619 620 A2**
(43) Veröffentlichungstag der Anmeldung: **12.10.1994**
(21) Anmeldenummer: 94105492.6
(22) Anmeldetag: 08.04.1994
(51) Int. Cl.: H01Q 9/42, G08C 17/00, F24D 19/10, H01Q 1/22, G08C 17/02

(54) **Verbrauchsverteiler, insbesondere Heizkosten- oder Warmwasserkostenverteiler**

(30) Priorität: 08.04.1993 DE 4311591
(71) Anmelder: KUNDO SYSTEMTECHNIK GmbH, D-78112 St. Georgen (DE)
(72) Erfinder: Bresselschmitt, Joachim, D-78120 Furtwangen (DE)

(57) **Zusammenfassung**

Die Erfindung hat die Ausgestaltung und Anordnung der Antenne (2o) in Verbrauchsverteilern, insbesondere Heizkosten- und Warmwasserkostenverteilern zum Gegenstand, welche einer zentralen Erfassung in einem außerhalb von Wohnungen befindlichen Erfassungsgerät unterliegen, wobei die Meßdatenübertragung durch eine drahtlose Verbindung im UHF-Bereich vorgenommen wird und die zwischen dem Verbrauchsverteiler und einer Zentralempfangsstelle abgewickelt wird.

Der Verbrauchsverteiler, insbesondere Heizkostenverteiler, ist eine selbständige Meßstelle, welche den ermittelten Verbrauch elektronisch festhalten und auch unmittelbar anzeigen kann.

Die Antenne (2o) ist entweder innerhalb des Gehäuses (1, 21) des Verbrauchsverteilers oder unmittelbar an diesem angeordnet, so daß eine besondere Verlegung einer Antenne (2o) am Montageort des Verbrauchsverteilers nicht notwendig ist; diese ist vielmehr fester Bestandteil des Verbrauchsverteilers, insbesondere Heizkostenverteilers. Es werden verschiedene Arten der Ausgestaltung und Anordnung der Antenne (2o) in oder an dem Gehäuse (1, 21) offenbart.

## Beschreibung

Die Erfindung betrifft einen elektrischen Verbrauchsverteiler, insbesondere Heizkosten- oder Warmwasserverteiler, für Wohn- und/oder Geschäftsräume mit drahtloser Übertragung der ermittelten Verbrauchswerte nebst Kenn- und Spezifizierungsdaten an eine Zentralstelle, zur Weiterübertragung an eine zentrale Abrechnungsstelle oder zur unmittelbaren Ausfertigung der Verbrauchsabrechnung.

Zweck der Erfindung ist es, die zentrale Ablesung der von Verbrauchskostenverteilern ermittelten Verbrauchswerte zu fördern.

Es ist bekannt, zur zentralen Ablesung von Verbrauchsverteilern in Form von Heizkostenverteilern eine zentrale Ablesung dadurch vorzunehmen, daß die einzelnen Geräte über mehrere derselben erfassende Drahtschleifen mit einer außerhalb der Wohnungen vorgesehenen Zentralstelle verbunden sind, an welcher die Verbrauchsdaten, wenn nicht der einzelnen Meßstellen, so doch der gesamten Wohnung ablesbar, ggf. sogar ausdruckhar sind.

Hierzu sind jedoch umfangreiche elektrische Installationen erforderlich, um die einzelnen Verbrauchsverteiler mit der Zentralstelle zu verbinden. Darüber hinaus sind die Leitungsführungen dieser zentralen Erfassungsanlagen leicht Störungen ausgesetzt, welche die Funktionssicherheit einer solchen Anlage beeinträchtigen.

Es ist ferner bekannt, als Heizkostenverteiler ausgebildete Verbrauchsverteiler mit kleinen eingebauten UFH-Sendern zu versehen, welche die ermittelten Meßwerte an eine außerhalb der Wohnungen vorgesehenen Zentralstelle übermitteln, die über einen zugeordneten Funkempfänger, die von den einzelnen Meßstellen übersandten Meßwerte entgegennimmt und verarbeitet.

Der Erfindung liegt die Aufgabe zugrunde, die für eine solche bekannte drahtlose Verbrauchsverteileranlage verwendeten Verbrauchsverteiler, insbesondere Heizkostenverteiler, hinsichtlich ihrer technischen Ausgestaltung zu verbessern.

Die Erfindung löst die gestellte Aufgabe dadurch, daß die Antenne der Verbrauchsverteiler als ein sich in Längsrichtung des Gehäuses des Verbrauchsverteilers erstreckendes längliches elektrisch leitendes Teil ausgebildet ist, das an seinem einen Ende mit dem elektrischen Ausgang der diesem Ende benachbart zugeordneten Schaltungsanordnung des UHF-Senders verbunden ist und dessen anderes Ende elektrisch isoliert gehalten ist.

Eine spezielle Ausgestaltung der Erfindung besteht darin, daß die Antenne als außen am Gehäuse des Verbrauchsverteilers in dessen Längsrichtung entlang geführtes Element gebildet ist, dessen eine äußere Ende elektrisch mit dem Ausgang der diesem Ende im Gehäuse des Verbrauchsverteilers benachbarten Schaltungsanordnung (16) des UHF-Senders (18) verbunden ist und dessen anderes Ende isoliert am Gehäuse endet.

Eine andere spezielle Ausgestaltung der Erfindung wird darin gesehen, daß die Antenne als ein sich entlang der gedruckten Leiterplatte erstreckendes elektrisch leitendes Teil ausgebildet ist, das mit einem Ende elektrisch mit dem Ausgang der diesem Ende benachbart auf oder nahe der gedruckten Leiterplatte angeordneten Schaltungsanordnung des UHF-Senders verbunden ist und dessen anderes Ende isoliert gehalten ist.

Schließlich wird eine noch zusätzliche Ausgestaltung der Erfindung darin erkannt, daß die Antenne als ein sich entlang der gedruckten Leiterplatte erstreckender, mit seinen abgebogenen beiden Enden auf dieser gehalterter Drahtbügel ausgebildet ist, der mit seinem einen Ende mit dem elektrischen Ausgang der unmittelbar benachbart zu diesem Ende auf der gedruckten Leiterplatte angeordneten Schaltungsanordnung des UHF-Senders verbunden ist und der mit seinem anderen Ende isoliert mit der Leiterplatte verbunden ist.

Weitere Fortbildungen und Ausgestaltungen der Erfindung sind aus den Unteransprüchen entnehmbar.

Die Erfindung hat eine Anzahl von Vorteilen aufzuweisen. So ist keine besondere Verlegung der Antenne außerhalb des Gehäuses, des z.B. Heizkostenverteilers erforderlich. Eine Auftrennung zwischen Gerät und Antenne kommt nicht zustande, sondern beide Einheiten bleiben stets vereinigt, so z.B. bei einer Montage oder Demontage des Verbrauchsverteilers, z.B. Heizkostenverteilers; besondere Maßnahmen zur Antennenverlegung sind also nicht erforderlich.

Die Erfindung ist nachfolgend in Form eines Ausführungsbeispieles in dieser Beschreibung erläutert und in den beiliegenden Zeichnungen im einzelnen dargestellt.

Es zeigen:
- Figur 1: eine Draufsicht auf das Gehäuseunterteil eines geöffneten Heizkostenverteilers einer ersten Ausführungsform der Erfindung;
- Figur 2: eine Seitenansicht des vom Gehäuseunterteil des Heizkostenverteilers nach Figur 1 abgenommenen Gehäuseoberteiles;
- Figur 3: eine Seitenansicht des Gehäuseoberteiles einer zweiten Ausführungsform der Erfindung;
- Figur 4: eine Draufsicht auf das Gehäuseunterteil eines geöffneten Heizkostenverteilers einer dritten Ausführungsform der Erfindung;
- Figur 5: eine linke Seitenansicht der gedruckten Leiterplatte des Heizkostenverteilers nach einer vierten Ausführungsform der Erfindung.

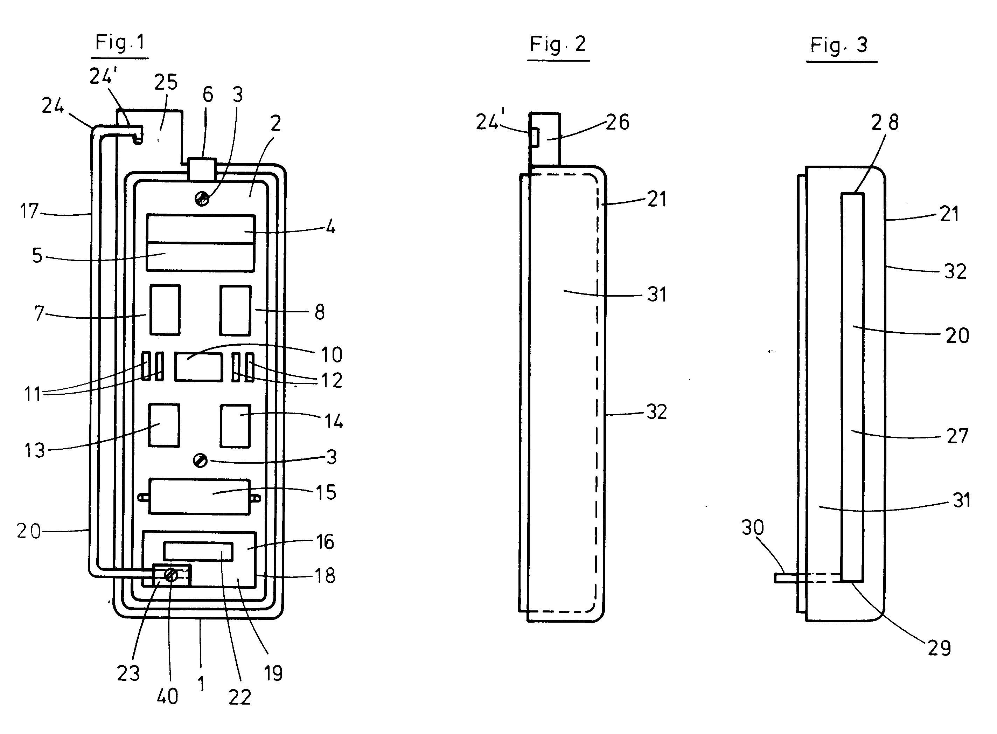

Die Figuren 1 und 2 stellen einen Heizkostenverteiler nach der Erfindung dar. Figur 1 zeigt das Gehäuseunterteil 1 mit der eingesetzten gedruckten Leiterplatte 2, welche mit Schrauben 3 gehaltert ist.
Auf der gedruckten Leiterplatte 2 ist eine Digitalanzeige 4 für den aktuellen Verbrauchswert, sowie eine weitere Digitalanzeige 5 für den Bewertungsfaktor vorgesehen. Dieser Wert wird über einen Steckeranschluß 6 eingegeben, über welchen auch ermittelte Verbrauchswerte (Neu- und Altwerte) entnommen und einem Handheld-Computer zugeleitet werden können.

Auf der Leiterplatte 2 sind ferner inte-grierte Schaltungen 7, 8, ein Heizkörpersensor 1o, Bauelemente 11, 12 sowie weitere integrierte Schaltungen 13, 14 vorgesehen. Die Speisung des Heizkostenverteilers erfolgt über eine gemeinsame Batterie, insbesondere Lithium-Batterie 15, welche ebenfalls auf der gedruckten Leiterplatte 2 angeordnet ist.
Unten am äußersten Ende der Leiterplatte 2 ist schließlich die Schaltungsanordnung 16 für den UHF-Kleinstsender 18 vorgesehen. Diese Schaltungsanordnung 16 ist auf einer kleinen separaten Leiterplatte 19 aufgebracht und besteht aus einer Reihe von nicht näher dargestellten Bauelementen, so Transistoren, Widerständen und Induktivitäten. Zweckmäßig wurde für die Schaltungsanordnung des UHF-Kleinstsenders ein akustisches Oberflächenwellenelement 22 als Resonator verwendet, das kleine Abmessungen und stabile Frequenzverhältnisse ermöglicht. Die Schaltungsanordnung 16 ist am unteren äußersten Ende im Gehäuse des Heizkostenverteilers angebracht, um eine möglichst lange Ausdehnung der Antenne 2o zu ermöglichen. Diese ist als Drahtbügel 17 ausgebildet und außen am Gehäuse 1, 21 entlanggeführt. Sie ist als Marconi-Antenne ausgebildet, die mit einer Frequenz von Lambdaviertel schwingt; sie ist am unteren Ende an der Schaltungsanordnung 16 an deren elektrischem Ausgang 4o entweder angelötet oder aber - wie das Ausführungsbeispiel zeigt - an einer Klemme 23 lösbar verschraubt.

Am oberen Ende ist die Antenne 2o elektrisch offen bzw. isoliert gehalten, sie besitzt jedoch dort eine Abbiegung oder Abkröpfung 24, die in einer entsprechenden Ausnehmung 24' eines Gehäusefortsatzes 25, 26 aufgenommen ist.

Bei geschlossenem Gehäuse 1, 21 ist die Antenne 2o in ihrer Aufnahme 24' bzw. Halterung 23 gesichert.

Die Schaltungsanordnung 16 des UHF-Senders arbeitet mit einer UHF-Frequenz von ca. 45o MHz, genauer mit einem von der Telekom für Steuer- und Meßzwecke in diesem Bereich zugelassenen Frequenz.

Auf Grund der beschränkten Längenverhältnisse der Antenne 2o wird eine Anpassung an die übertragene Frequenz nur bedingt möglich, die gegebenen Verhältnisse stellen aber einen tragbaren Kompromiß dar.

In der Figur 3 ist eine ähnliche Ausführungsform der Erfindung wie diese von Figur 1 und 2 dargestellt. Dort ist die Antenne 2o seitlich am Gehäuseoberteil 21 entlang als eine metallische Zierleiste 27 geführt. Diese ist mit ihren äußeren Enden 28, 29 an der Seitenfläche des Gehäuseoberteiles 21 gehaltert, zusätzlich noch vorteilhaft mit diesem verklebt.

Am Ende 29 verfügt die Zierleiste 27 über einen Ansatz 3o, der in den Bereich der gedruckten Leiterplatte 2 des Gehäuseunterteiles 1 ragt und dort bei geschlossenem Gehäuse 1, 21 zur kontaktgebenden Auflage auf der gedruckten Leiterplatte 19 gelangt.

Selbstverständlich könnte die als Zierleiste 27 ausgebildete Antenne 2o auch am Gehäuseunterteil 1 vorgesehen sein. Die Zuordnung der Antenne 2o zum Gehäuseoberteil 21 hat den Vorteil, daß diese (2o) - im Falle eines Heizkostenverteilers - vom Heizkörper weiter entfernt angeordnet ist und somit die Strahlung von ersterem weniger bedämpft wird. In vielen Fällen ist ohnehin die Anordnung so getroffen, daß sich die gedruckte Leiterplatte 2 mit ihren Bauelementen 4 - 16 bzw. Baugruppen innerhalb des Gehäuseoberteiles 21 befindet und somit sich die Zuordnung der Antenne 2o zu diesem (21) empfiehlt oder nahelegt.

Gemäß einer zweckmäßigen Ausgestaltung der Erfindung könnte das in Figur 3 die Antenne 2o darstellende oder bildende Metallband bzw. die Zierleiste 27 ganz oder teilweise in eine Seitenwand des Gehäuseoberteiles 21 bei der Herstellung dieses Teiles in einem Kunststoff-Formverfahren mit eingeformt, z.B. eingespritzt sein. Dies würde die Herstellung sehr vereinfachen.

Auch in einem solchen Falle muß natürlich ebenfalls ein elektrisch zugänglicher Ansatz oder Fortsatz 3o an der Antenne 2o vorgesehen sein, um eine Verbindung mit der Schaltungsanordnung 16, des UHF-Senders 18 zu ermöglichen - unabhängig davon, ob die gedruckte Leiterplatte 2 mit ihren Bauelementen 4 - 16 (18) nun im Gehäuseunterteil 1 oder Gehäuseoberteil 21 angeordnet sein sollte.
Zweckmäßig wird hierzu auf der Leiterplatte 19 der Schaltungsanordnung 16 ein entsprechend ausgebildeter, möglichst flexibler, Gegenkontakt 4o vorgesehen, der bei geschlossenem Gehäuse 1, 21 mit dem Ansatz 30 der Zierleiste 27 in kontaktgebende Berührung tritt oder der aber fest mit dem Ansatz 3o verlötet ist.

Anstelle eines Metallbandes 27 könnte natürlich auch ein Metallstab oder Draht in einer Seitenwand 31 oder seitlich in der Vorderwand 32 des Gehäuseoberteiles 21 angeordnet bzw. eingespritzt oder eingeformt sein.

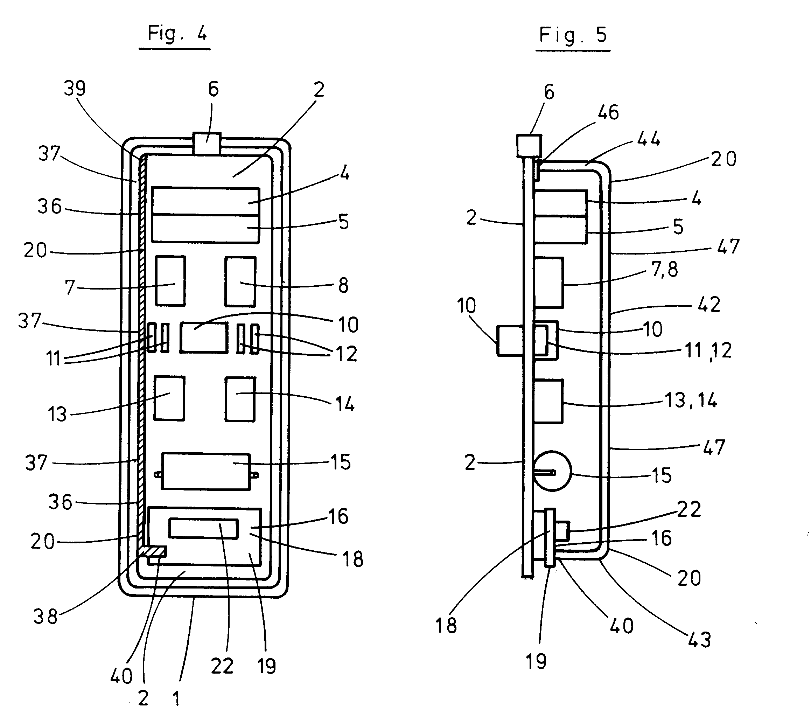

In Figur 4 ist eine weitere Ausführungsform der Erfindung dargestellt. Bei dem Heizkostenverteiler nach dieser Darstellung ist die Antenne 2o als eine entlang einer Kante 36 der gedruckten Leiterplatte 2 dieses Gerätes geführte Leiterbahn 37 ausgebildet, welche mit ihrem unteren Ende 38 elektrisch mit dem Ausgang 4o der Schaltungsanordnung 16 des UHF-Senders 18 verbunden ist, die (16) mit ihrer Leiterplatte 19 benachbart angeordnet ist. Diese Ausgestaltung hat den Vorteil, daß die Leiterbahn 37, welche die Antenne 2o bildet, zusammen mit den übrigen Leiterbahnen der gedruckten Leiterplatte 2 in ein und demselben Arbeitsgang ausgebildet werden kann, ohne zusätzlichen Mehraufwand.

Die die Antenne 2o bildende Leiterbahn 37 ist in Figur 4 zur Verdeutlichung schraffiert dargestellt. Diese Leiterbahn 37 kann sich natürlich auch auf der Rückseite der gedruckten Leiterplatte 2 befinden, da dort auch die übrigen Leiterbahnen für das Schaltungsnetzwerk des Heizkostenverteilers vorgesehen sind.

In Figur 5 ist eine Abwandlung der Ausführungsform der Erfindung nach Figur 4 dargestellt. Anstelle der gedruckten Leiterbahn 37 als Antenne 2o nach Figur 4, ist hier ein U-förmiger Drahbügel 42 vorgesehen, der mit seinen beiden abgebogenen Enden 43 und 44 einmal (43) nahe der unten angeordneten Schaltungsanordnung 16 des UHF-Senders 18 auf der gedruckten Leiterplatte 2 angebracht und elektrisch mit dem Ausgang 4o dort (16) verbunden ist, während das obere abgebogene Ende 44 isoliert, z.B. auf einem Stück blinder Leiterbahn 46 verlötet und damit gehaltert ist.

Diese Anordnung einer Antenne 2o hat den Vorteil, daß der Schaft 47 des Drahtbügels 42 durch entsprechende Ausgestaltung der abgebogenen Enden 43, 44 entfernter von der gedruckten Leiterplatte 2 und auch mehr abgehoben vom Heizkörper gehalten werden kann. Dadurch ist eine Möglichkeit zur Reduzierung der Bedämpfung der Antenne 2o gegeben. Darüber hinaus ist mit einer solchen Anordnung eine Platzersparnis verbunden, da ggf. eine schmalere gedruckte Leiterplatte 2 Verwendung finden kann.

Bei allen bisher heschriebenen Ausführungsformen der Erfindung ist das die Antenne 2o bildende Element 17, 27, 37, 42 elektrisch einer-ends mit dem Ausgang 4o der Schaltungsanordnung 16 des UHF-Senders 18 sowohl elektrisch als auch mechanisch verbunden. Das andere Ende 24, 28, 39, 44 des Elementes 17, 27, 37, 42 hingegen verbleibt jeweils elektrisch von der Schaltung der gedruckten Leiterplatte 2 und von Masse isoliert, d.h. elektrisch bzw. hochfrequenztechnisch "offen".

## Patentansprüche

**1.** Elektrischer Verbrauchsverteiler, insbesondere Heizkosten- oder Warmwasserkostenverteiler für Wohn- und/oder Geschäftsräume, mit drahtloser Übertragung der ermittelten Verbrauchswerte nebst Kenn- und Spezifizierungsdaten für die betreffende Meßstelle an eine Zentralstelle zur Weiterübertragung an eine zentrale Abrechnungsstelle oder zur unmittelbaren Ausfertigung der Verbrauchsabrechnung, wobei die Übertragung insbesondere auf dem UHF-Funkweg erfolgt,
dadurch gekennzeichnet,
daß die Antenne (2o) als ein sich in Längsrichtung des Verbrauchsverteilers erstreckendes längliches elektrisch leitendes Teil (17, 27, 37, 42) ausgebildet ist, das an seinem einen Ende (38, 29, 43) mit dem elektrischen Ausgang (4o) der diesem Ende (38, 29, 43) benachbart angeordneten Schaltungsanordnung (16) des UHF-Senders (18) verbunden ist und das mit dem anderen Ende (24, 28, 39, 44) elektrisch isoliert gehalten ist.

**2.** Elektrischer Verbrauchsverteiler nach Anspruch 1,
dadurch gekennzeichnet,
daß die Antenne (2o) als außen am Gehäuse ( 1, 21 ) des Verbrauchsverteilers in dessen Längsrichtung entlang geführtes Element (17, 27) gebildet ist, dessen eine äußere Ende (23, 27) elektrisch mit dem Ausgang (4o) der diesem Ende (23, 29) im Gehäuse (1, 21) des Verbrauchsverteilers gegenüberliegenden Schaltungsanordnung (16) des UHF-Senders (18) verbunden ist und dessen anderes Ende frei am Gehäuse endet (Figur 1 - 3).

**3.** Elektrischer Verbrauchsverteiler nach Anspruch 1,
dadurch gekennzeichnet,
daß die Antenne (2o) als ein sich entlang der gedruckten Leiterplatte (2) des Verbrauchsverteilers erstreckendes elektrisch leitendes Teil (37, 42) ausgebildet ist, das mit einem Ende (38, 43) elektrisch mit dem Ausgang (4o) der diesem Ende (38, 43) benachbart auf oder nahe der gedruckten Leiterplatte (2) angeordneten Schaltungsanordnung (16) des UHF-Senders (18) verbunden ist und dessen anderes Ende (39, 44) isoliert gehalten ist. (Figur 4 und 5)

**4.** Elektrischer Verbrauchsverteiler nach Anspruch 3,
dadurch gekennzeichnet,
daß die Antenne (2o) als ein sich entlang der gedruckten Leiterplatte (2) erstreckendes, mit seinen abgebogenen beiden Enden (43, 44) auf dieser gehalterter Drahtbügel (42) ausgebildet ist, der mit seinem einen Ende (43) mit dem elektrischen Ausgang (4o) der unmittelbar benachbart zu diesem Ende (43) auf der gedruckten Leiterplatte (2) angeordneten Schaltungsanordnung (16) des UHF-Senders (18) verbunden ist und der mit seinem anderen Ende (44) isoliert mit der Leiterplatte (2) verbunden ist. (Figur 5).

**5.** Elektrischer Verbrauchsverteiler nach Anspruch 3,
dadurch gekennzeichnet,
daß die Antenne (2o) als eine auf der gedruckten Leiterplatte (2) entlang einer Längskante (36) vorgesehene gedruckte Leiterbahn (37) ausgebildet ist, die an einem Ende (38) mit dem Ausgang (4o) der zu diesem Ende (38) benachbart angeordneten Schaltungsanordnung (16) des UHF-Senders (18) verbunden ist und die mit dem anderen Ende (39) an der Leiterplatte (2)isoliert endet (Figur 4).

**6.** Elektrischer Verbrauchsverteiler nach einem der Ansprüche 1 - 5,
dadurch gekennzeichnet,
daß die Bauelemente für die Schaltungsanordnung (16) des UHF-Senders (18) am unteren Ende (41) der gedruckten Leiterplatte (2) angebracht sind und daß sich das als Antenne (2o) dienende Element (17, 27, 37, 42) von der Schaltungsanordnung (16) des UHF-Senders (18) aus nach oben erstreckt.

**7.** Elektrischer Verbrauchsverteiler nach Anspruch 1,
dadurch gekennzeichnet,
daß das die Antenne (2o) bildende, längliche, elektrisch leitende Teil als ein Stab oder Draht ausgebildet und innerhalb des Querschnittes eines der Gehäuseteile (1, 21), in deren Längsrichtung verlaufend, angeordnet ist.

**8.** Elektrischer Verbrauchsverteiler nach Anspruch 7,
dadurch gekennzeichnet,
daß der die Antenne (2o) bildende Stab oder Draht innerhalb des Gehäuseabdeckteiles (21) des Verbrauchsverteilers angeordnet ist.

**9.** Elektrischer Verbrauchsverteiler nach Anspruch 8,
dadurch gekennzeichnet,
daß der Stab oder Draht in einem der aus Kunststoff gefertigten Gehäuseteile (1, 21) des Verbrauchsverteilers eingespritzt ist.

**1o.** Elektrischer Verbrauchsverteiler nach Anspruch 2,
dadurch gekennzeichnet,
daß die Antenne (2o) als eine am Gehäuse (21) des Verbrauchsverteilers entlanggeführte Zierleiste (27) ausgebildet ist (Figur 3).

**11.** Elektrischer Verbrauchsverteiler nach Anspruch 2,
dadurch gekennzeichnet,
daß die Antenne (2o) als ein außen am Gehäuse (1) entlang verlaufender Drahtbügel (17) ausgebildet ist, der mit wenigstens einem Ende (24) im Gehäuse (1)des Verbrauchsverteilers gehaltert ist (Figur 1).

**12.** Elektrishcer Verbrauchsverteiler nach Anspruch 2, 1o oder 11,
dadurch gekennzeichnet,
daß das die Antenne (2o) bildende Element (27) dem vom Heizkörper abgewandten Gehäuseteil (21) bei einer Ausbildung als Heizkostenverteiler zugeordnet ist.

**13.** Elektrischer Verbrauchsverteiler nach Anspruch 3,
dadurch gekennzeichnet,
daß der Drahtbügel (42) an seinem der Schaltungsanordnung (16) des UHF-Senders (18) benachbarten Ende (43) mit einer Leiterbahn verbunden ist, die nach dem elektrischen Ausgang (4o) dieser Schaltungsanordnung (16) führt und daß das andere Ende (44) des Drahtbügels (42) mit einem blinden Leiterbahnelement (46) der gedruckten Leiterplatte (2) verbunden ist.

**14.** Elektrischer Verbrauchsverteiler nach Anspruch 3,
dadurch gekennzeichnet,
daß der Drahtbügel (42) sich entlang des Randes (36) der gedruckten Leiterplatte (2) erstreckt.

**15.** Elektrischer Verhrauchsverteiler nach Anspruch 3,
dadurch gekennzeichnet,
daß die Antenne (2o) als ein sich in Längsrichtung der gedruckten Leiterplatte (2) erstreckender Draht oder metallischer Stab (42) ausgebildet ist.

**16.** Elektrischer Verbrauchsverteiler nach einem der Ansprüche 1 - 15,
dadurch gekennzeichnet,
daß die Bauelemente der Schaltungsanordnung (16) des UHF-Senders (18) auf einer sep. Leiterplatte (19) angeordnet sind, welche ihrerseits auf der gedruckten Leiterplatte (2) angebracht ist.

**17.** Elektrischer Verbrauchsverteiler nach Anspruch 16,
dadurch gekennzeichnet,
daß als frequenzbestimmendes Element des UHF-Senders (18) ein akustische Oberflächenwellen erzeugender Resonator (22) Verwendung findet, der mit auf der sep. Leiterplatte (19) angeordnet ist.

**18.** Elektrischer Verbrauchsverteiler nach Anspruch 16,
dadurch gekennzeichnet,
daß der Anschluß (23) des UHF-Senders (18) für die Antenne (2o) auf der sep. Leiterplatte (19) vorgesehen ist.

**19.** Elektrischer Verbrauchsverteiler nach Anspruch 16,
dadurch gekennzeichnet,
daß zur Stromversorgung der Schaltungsanordnungen beider Leiterplatten (2, 19) eine gemeinsame Speisebatterie vorgesehen ist.

**2o.** Elektrischer Verbrauchsverteiler nach Anspruch 16,
dadurch gekennzeichnet,
daß die sep. Leiterplatte (19) für den UHF-Sender (18) zusammen mit der gedruckten Leiterplatte (2) für die übrige Schaltungsanordnung innerhalb des Gehäuses (21) des Verbrauchsverteilers angeordnet sind.
